# EUROPEAN PATENT APPLICATION

(11) **EP 4 847 896 A1**
(43) Date of publication of application: **02.12.2026**
(21) Application number: 26178933.3
(22) Date of filing: 15.05.2026
(51) Int. Cl.: G01M 3/28

(54) **METHOD IMPLEMENTED BY COMPUTER AND DEVICE FOR REDUCING GAS LEAKS IN SYSTEMS OPERATING WITH PRESSURIZED WORKING GAS**

(30) Priority: 16.05.2025 IT 202500011088
(71) Applicant: Enersem S.r.l., 20133 Milano (IT)
(72) Inventor: FREIN, Antoine, 20125 Milano (IT); BARRERA, Noemi, 20134 Milano (IT); CERIO, Amedeo, 20139 Milano (IT)
(74) Representative: PGA S.p.A.

(57) **Abstract**

The present invention relates to a computer implemented method (200) for reducing gas leak in a system (1) operating with pressurized working gas, such as compressed air. The system (1) comprises a pressurized gas source (2), a predetermined number of user devices (4), a gas distribution circuit (5) having one or more service lines (6) each configured to serve a respective one of said user devices (4), a valve (7) operating on each service line (6), a respective pressure sensor operating on each service line (6), downstream of said valve (7) and upstream of the user device (4), a respective flow sensor (8) operating on each service line (6) and configured to enable determination of the gas flow rate directed to the respective user device (4); the method (2009) includes verifying (201) whether information has been received indicating that leak is present on the service line (6) during non-use of the respective user device (4), or leak has been detected on the service line (6) during non-use of the respective user device (4); if the preceding step gives a positive outcome, the method includes controlling (202) the valve (7) from the open condition to a control condition, causing a corresponding pressure reduction in a section of the service line (6) between the valve (7) and the respective user device (4).

## Description

### Field of the invention

An aspect of the invention relates to a method implemented by computer and to a related working gas leak monitoring device in systems using a pressurized working gas, for example for monitoring air leaks in compressed air systems.

Another aspect of the invention relates to a method implemented by computer and to a related device for the reduction of working gas leaks in systems using a pressurized working gas, for example for the reduction of air leaks in compressed air systems.

It is not excluded the application of the methods and devices herein described and claimed for the monitoring and/or reduction of gas leaks in systems or plants using a working gas other than air, such as for example oxygen, nitrogen, carbon dioxide or others which may find application for example in the medical or industrial field. In accordance with an aspect of the invention the methods and devices herein described and claimed are for example destined for identifying and/or reducing any leaks inside or at the user devices of a given system or plant when said user devices are not used (i.e. when they are in stand-by).

With exemplary reference to industrial applications that use compressed air as working gas, such user devices can be, in a non-limiting way, the following:
- pneumatic cylinders or actuators, pneumatic manipulators typically used in the industrial automation sector,
- pneumatic conveyor systems for materials,
- tools and equipment powered by compressed air, such as pneumatic tools or blowing systems.

### Background art

Various solutions are known for determining leaks in compressed air plants.

For example, patent publication EP4431899 (A1) discloses a method for detecting leaks in a compressed air system using machine learning. The method provides for detecting compressed air leaks in the compressed air system using at least one trained model applied to pressure and flow rate data, in order to identify a plurality of compressed air leak models based on the pressure and flow rate data.

Also in the field of solutions using "machine learning" systems, patent publication US2023088241 (A1) discloses a system for monitoring a pneumatic system wherein the monitoring unit has a normal-condition model trained with data of the pneumatic system under normal conditions. There are a set of sensors for data acquisition and a differentiator for determining the deviations of the characteristics from those of the normal model and thereby assessing whether or not leaks are present.

Finally, patent publication EP3060898 (B1) teaches to model the pneumatic plant. In this case, consumption profiles are determined for each user device of the network and pressure and flow profiles for the network based on the determined consumption profiles; the difference between calculated pressure values and/or calculated flow rates and pressure values and/or flow rates measured by sensors is then determined; finally, a warning signal is emitted if the determined difference is greater than a predetermined threshold value.

The solutions described above involve the need for modelling the behavior of the pneumatic system under monitoring with respect to the various operating conditions and therefore the need for an expensive training process. Moreover, the solutions described present a non-negligible computational complexity and therefore require a certain computing power.

In addition, in one or more of the known solutions there is the need for the user device or user devices of the compressed air/gas plant (i.e. the equipment using the compressed gas) to inform the control system arranged to monitor the leaks every time the user device or the user devices are in stand-by (i.e. in a condition wherein, in the absence of leaks, no gas should be used). However, this need determines the requirement, and the consequent limitation, of having a communication between each user device and the control system.

From the point of view of the control of any leaks, the prior art has offered the following solutions.

So-called centralized regulation systems are in fact known wherein one or more compressors are activated for example as a function of the pressure measured at one or more points of the compressed air distribution plant seeking, depending on the solutions, to maintain the pressure within one or more desired ranges or to ensure that the pressure never drops below a minimum pressure. Centralized regulation lacks local adaptability and does not take into account the needs of the individual user devices with the consequence of imposing a pressure higher than necessary in order to satisfy the most demanding user devices. Furthermore, with the centralized regulation, the distance between the compressor and the user devices involves unavoidable pressure drops and dispersions, which may not be effectively compensated for by the central system.

Solutions using local regulators installed near the end user devices are also known with the aim of lowering the pressure supplied by the network to a predetermined level, yet without taking into account the variations in the demand of the user device. Known local regulators cannot adapt in real time to variations in the compressed air demand of the user devices, and require significant investments in infrastructures and integration with existing systems.

Ultimately, the traditional solutions described are not adaptable to the variations of the operating conditions of the user devices and are not able to effectively minimize leaks, especially in applications where the demand of compressed air fluctuates over time, further than often involving high implementation costs and difficulties of integration.

### Objects of the invention

In the light of what has been above discussed, an object of the invention is to provide a simple and reliable solution to the problem of identifying leaks in systems using compressed gas, for example air, as working gas.

Furthermore, an auxiliary object of the invention is to provide a method implemented by computer and a computerized system for monitoring working gas leaks in pressurized gas systems that are easy to implement.

A further object of the invention is to provide a method implemented by computer and a computerized system for monitoring working gas leaks in pressurized gas systems that do not require high computing powers for their implementation.

Furthermore, it is an object to define a method implemented by computer and a computerized system for monitoring gas leaks at one or more user devices of a pressurized gas plant without the need for having a communication between each user device and the control system aimed at indicating the operating state of the user device itself.

It is then an additional object to provide a method implemented by computer and a computerized system for monitoring gas leaks which can be implemented while minimizing the use of sensors and using sensors present exclusively upstream of the user devices, i.e. in the pressurized gas distribution circuit feeding the user devices.

An additional object of the invention is to provide a method and a computerized system capable of identifying not only the presence of a gas leak, but also of estimating the leak value of a user device, allowing a quantification of the wasted energy and of the associated economic impact.

Another object of the invention is to opportunely identify particular operating conditions of the compressed air/gas system thereby allowing to highlight periods in which leaks play a fundamental role.

On the side of leak reduction, it is also an object of the invention to provide a solution capable of minimizing leaks in systems using compressed gas, for example air, as working gas.

A further auxiliary object of the invention is to provide a method implemented by computer and a computerized system for the reduction of working gas leaks in pressurized gas systems which are easy to implement also on pre-existing plants. An additional object of the invention is to devise a method implemented by computer and a computerized system for the reduction of working gas leaks in predetermined pressurized gas systems adaptable to variations of the operating conditions of the user devices.

Finally, it is an object of the invention to provide a method implemented by computer (and a respective computerized device) for monitoring leaks, as well as a method implemented by computer (and a respective computerized device) for the reduction of leaks which are easily combinable with each other.

### Definitions and conventions

In the present text, including the summary, the detailed description of the examples and the claims, as method implemented by computer is intended a method implemented by one or more computers, by a computer network, or by one or more programmable devices (for example one or more electronic boards), by one or more analog-type electronic devices, or by a combination of these devices. Analogously as computerized system is intended a system comprising one or more computers, one or more electronic boards or other programmable components, one or more analog-type electronic devices, a computer system or a combination of these devices.

Nm³/h (normal cubic meters per hour) indicates the quantity of gas which flows or is consumed in one hour, corrected for standard temperature and pressure conditions. Nm³ = normal cubic meter = 1 cubic meter of gas measured under standard conditions:
∘ Temperature: 0 °C (273,15 K)
∘ Pressure: 1 atm (101.325 kPa)

Finally, with the term "user devices" are intended devices of various kinds, connected or connectable to the system 1 hereinafter described and claimed, which use gas or compressed air: for example, compressed air guns for inflation, tools driven by compressed air, devices which exploit gas or compressed air to operate, and so on.

### Summary

One or more of the objects above indicated are substantially achieved by a method and by a device according to any one of the appended claims.

Further features of the invention are described hereinafter in aspects A1 to A58.

A1. Method, implemented by computer or electronic circuit, for monitoring gas leaks in a system (1) operating with pressurized working gas, optionally wherein the pressurized working gas is compressed air,
said pressurized working gas system (1) comprising:
   - a pressurized gas source (2), optionally equipped with a predetermined number of compressors (3),
   - a gas distribution circuit (5) configured to be placed in fluid communication with the pressurized gas source (2),
   - a predetermined number of user devices (4) each configured to be placed in fluid communication with the gas distribution circuit (5),
   - for each of said user devices (4), a respective flow sensor (8) operating on a section of said gas distribution circuit (5) and configured to enable the determination of the gas flow rate directed to the respective user device (4),
wherein the method includes the following steps performed for each of said user devices (4) using the respective flow sensor (8):
   - verifying (101) whether there are time intervals with stable flow rate, and
   - if such time intervals with stable flow rate exist,
      ∘ identifying (104), among such stable flow rate time intervals, one or more relevant intervals in which the flow rate measured by the flow sensor (8) is deemed non-negligible,
      ∘ determining (105) a value of (or presence of) gas leak during non-use of the user device (4), based on one or more flow rate values measured by said flow sensor (8) in one or more of said relevant intervals.

A2. Method according to aspect A1, wherein if, following said verifying step (101), it is determined that no stable flow rate time intervals exist, the method provides for concluding (102) that there are no gas leaks during non-use of one or more of said user devices (4); and wherein
if, following said verifying step (101), it is determined vice versa that stable flow rate time intervals are found, the identifying step (104) further includes:
- identifying (104a), among said stable flow rate time intervals, whether there are time intervals in which the flow rate measured by said flow sensor (8) is deemed negligible,
- verifying (104c) whether the only stable flow rate time intervals are those with flow rate deemed negligible, and if so, concluding (102) that no gas leaks are present during non-use of one or more of said user devices (4).

A3. Method according to aspect A2, wherein identifying (104a), among said stable flow rate time intervals, whether there are time intervals in which the flow rate measured by said flow sensor (8) is deemed negligible includes:
- determining an average flow rate value (Φ_{i_mean}) in each of said stable flow rate time intervals,
- considering the flow rate measured by said flow sensor (8) in a time interval at stable flow rate as negligible if the average flow rate value (Φ_{i_mean}) in that time interval at stable flow rate is zero or less than a predetermined minimum value.

It is noted that in order to determine that the flow rate in a time interval is to be considered negligible it is alternatively possible, instead of the mean value, to use another reference value, for example the maximum flow rate value in the stable flow rate time interval: if the maximum flow rate value in such stable flow rate time interval is zero or less than a predetermined minimum value the time interval in question is then deemed to have a negligible flow rate.

A4. Method according to any one of the preceding aspects, wherein the step (105) of determining the value of gas leak during non-use of the user device (4) includes:
- determining (105a) an/the average flow rate value (Φ_{i_mean}) in each of said relevant intervals,
- comparing (105b) the average flow rate values (Φ_{i_mean}) of each relevant interval with each other, and
- checking (105c) whether said average flow rate values (Φ_{i_mean}) of each relevant interval deviate from each other beyond a predetermined acceptability criterion.

A5. Method according to aspect A4, wherein if the average flow rate values (Φ_{i_mean}) of each relevant interval do not deviate from each other beyond said predetermined acceptability criterion:
- concluding that the relevant intervals are all intervals in which there is gas leak during non-use of the user device (4), and
- calculating (105d) the value of said gas leak as a function of the average flow rate values (Φ_{i_mean}) of each relevant interval.

A6. Method according to aspect A5, comprising:
- determining an arithmetic mean (Φₘₑₐₙ) of the average flow rate values (Φ_{i_mean}) of each relevant interval, and
- calculating (105d) the gas leak value during non-use of the user device (4) as equal to the mean (Φₘₑₐₙ) of said average flow rate values (Φ_{i_mean}) of each relevant interval.

A7. Method according to aspect A4 or A5 or A6 wherein, if the average flow rate values (Φ_{i_mean}) of each relevant interval deviate from each other beyond said predetermined acceptability criterion, the method involves:
- analyzing (105e) a distribution of the flow rate measured by said flow sensor (8) and identifying (105f) representative flow rate intervals in which the flow rate values measured by the flow sensor most frequently fall,
- identifying (first part of 105g), among the representative flow rate intervals, peak values (Φₚₑₐₖ) of the flow rate that are most frequent (i.e. that occur most often and that could therefore be representative of leaks),
- selecting (second part of 105g), among the peak values (Φₚₑₐₖ) identified, the minimum peak value (Φ_{peak_min}), i.e. the peak value having lowest value among the peak values (Φₚₑₐₖ) identified,
- comparing (105h) the minimum peak value (Φ_{peak_min}) with a/the mean (Φₘₑₐₙ) of the average flow rate values (Φ_{i_mean}) of each relevant interval, and
- determining (105i) if the minimum peak value (Φ_{peak_min}) and said mean (Φₘₑₐₙ) deviate from each other beyond a predetermined margin of tolerance.

A8. Method according to aspect A7 wherein, if the minimum peak value (Φ_{peak_min}) and said mean (Φₘₑₐₙ) do not deviate from each other beyond the predetermined margin of tolerance, concluding that:
- the relevant intervals are all intervals where there is gas leak during non-use of one or more of said user devices (4), and
- the value of said gas leak is a function of the average flow rate values (Φ_{i_mean}) of each relevant interval, optionally equal to the mean (Φₘₑₐₙ) of said average flow rate values (Φ_{i_mean}) of each relevant interval.

A9. Method according to aspect A7 or A8 wherein, if the minimum peak value (Φ_{peak_min}) and said mean (Φₘₑₐₙ) deviate from each other beyond the predetermined margin of tolerance, the method involves:
- **selecting** (105j) the relevant intervals having the respective average flow rate value (Φ_{i_mean}) in a predetermined neighborhood close to the minimum peak value (Φ_{peak_min}), and
- concluding (105k) that:
   ∘ said selected relevant intervals are intervals where there is gas leak during non-use of one or more of said user devices (4), and
   ∘ the value of said gas leak is equal to the minimum peak value (Φ_{peak_min}).

A10. Method according to aspect A9, comprising qualifying the unselected relevant intervals as stationary intervals, i.e. intervals of time at stable flow rates that correspond to a stationary, leak-free, operation of the system (1) at working gas pressure.

A11. Method according to any one of the aspects A7 to A10, wherein in said selecting step (105g), among the peak values (Φₚₑₐₖ) identified, the minimum peak value (Φ_{peak_min}), the zero/null value is excluded.

A12. Method according to any one of the preceding aspects, wherein the gas distribution circuit (5) includes:
- at least one main line, optionally configured as a loop, in fluid communication with the pressurized gas source (2), and
- one or more service lines emerging from said main line, each service line being at one end connected and in fluid communication with the main line and, at an opposite end, serving a respective of said user devices (4),

and wherein a flow sensor (8) operating on each service line is provided to enable the determination of the gas flow rate flowing through the service line itself and directed to the respective user device (4),
and wherein the method is performed for each service line using the respective flow sensor (8).

A13. Method according to aspect A12, wherein a pressure sensor (9) is operating on each service line, upstream or downstream of the respective flow sensor (8), and wherein the method involves performing the following auxiliary procedure (106):
- determining (107) a relative pressure (Prᵢ) between the fluid in each service line and an outdoor environment at atmospheric pressure,
- calculating the flow rate values measured by said flow sensor (8) in one or more of said relevant intervals, as normalized flow rate values which are function of the relative pressure (Prᵢ).

A14. Method according to the preceding aspect, comprising:
- determining (108) the average value (Pr_{0_mean}) of said relative pressure (Prᵢ) during one or more of said relevant intervals in which gas leak was determined to be present during non-use of the user device (4),
- determining (109) the average value (Pr_{i_mean}) of said relative pressure (Pri) during each of said unselected relevant intervals,
- for each unselected relevant interval, calculating (step 110) a respective corrected average flow rate (Φ_{i_corr}) as a function of:
   ▪ one or more of the average flow rate values (Φ_{i_mean}) of each relevant interval where it has been determined that gas leak is present during non-use of the user device, optionally as a function of the mean (Φₘₑₐₙ) of said average flow rate values (Φ_{i_mean}) of each relevant interval where gas leak is present during non-use of the user device,
   ▪ said average value (Pr_{0_mean}) of relative pressure during one or more of said relevant intervals where it has been determined that gas leak is present during non-use of the user device,
   ▪ said average value (Pᵣⱼ₋ₘₑₐₙ) of said relative pressure during each of said unselected relevant intervals.

A15. Method according to the preceding aspect, wherein calculating the respective corrected average flow rate (Φ_{i_corr}) for each unselected relevant interval is performed as a function of one or more of the average flow rate values (Φ_{i_mean}) of each relevant interval in which it has been determined that gas leak is present during non-use of the user device, optionally as a function of the mean (Φₘₑₐₙ) of said average flow rate values (Φ_{i_mean}) of each relevant interval in which gas leak is present during non-use of the user device,
and as a function of a ratio between:
   - said average value (Prⱼ₋ₘₑₐₙ) of said relative pressure during each of said unselected relevant intervals and
   - said average value (Pr_{0_mean}) of relative pressure during one or more of said relevant intervals in which it has been determined that gas leak is present during non-use of the user device,
more particularly as a function of the square root of said ratio.

A16. Method according to aspect A13 or A14 or A15 in combination with aspect A7 or A8, wherein if the minimum peak value (Φ_{peak_min}) and said mean (Φₘₑₐₙ) deviate from each other beyond the predetermined margin of tolerance, the method involves:
- selecting (112) also the previously unselected relevant intervals if they have a corrected average flow rate (Φ_{i_corr}) in a predetermined neighborhood close to the minimum peak value (Φ_{peak_min}), and
- concluding (113) that:
   ∘ said previously unselected relevant intervals are also intervals in which there is gas leak during non-use of the user device (4),
   ∘ the value of said gas leak is equal to the minimum peak value (Φ_{peak_min}).

A17. Method according to any one of the preceding aspects, wherein a time interval is considered a stable flow rate time interval if the flow rate measured by said flow sensor (8) during that time interval exhibits a variation over time that is less than a predetermined stability threshold.

For example, a time interval is considered a stable flow rate time interval if the flow rate measured by said flow sensor (8) during that time interval has a derivative measured over time whose absolute value is less than a threshold value comprised in a range from a minimum of 0.007 Nm³/h to a maximum of 0.7 Nm³/h.

A18. Method according to the preceding aspect, wherein a time interval is considered a stable flow rate time interval if, in addition, that time interval during which the flow rate is stable has a duration greater than a predetermined minimum duration.

For example, a time interval is considered a stable flow rate time interval if, in addition, that time interval in which the flow rate is stable has a duration greater than a predetermined minimum duration of at least 5 minutes.

A19. Method according to any one of the preceding aspects, in combination with aspect A4, wherein determining whether the average flow rate values Φ_{i_mean} of each relevant interval deviate from each other beyond the predetermined acceptability criterion involves checking whether the standard deviation of the average flow rate values Φ_{i_mean} of each relevant interval is less than a predetermined threshold value, for example less than 2, more optionally less than 1.

A20. Method according to any one of the preceding aspects, in combination with aspect A7, wherein determining (105i) whether the minimum peak value (Φ_{peak_min}) and said arithmetic mean (Φₘₑₐₙ) deviate from each other beyond a predetermined margin of tolerance involves determining whether a difference between the minimum peak value (Φ_{peak_min}) and the arithmetic mean (Φₘₑₐₙ) is less in absolute value than 15% of the arithmetic mean (Φₘₑₐₙ), or whether a ratio between the minimum peak value (Φ_{peak_min}) and the arithmetic mean (Φ_{i_mean}) is comprised between 0.85 and 1.15.

A21. Method according to any one of the preceding aspects, in combination with aspect A9 or A16, wherein said predetermined neighborhood of the minimum peak value (Φ_{peak_min}) is defined as the minimum peak value (Φ_{peak_min}) ± 10% of the minimum peak value itself.

A22. Method according to any one of the preceding aspects, wherein the flow sensor (8) is sensitive to low flow rates comprised between 0 Nm³/h and 1 Nm³/h.

For example, the flow sensor (8) is a temperature-sensitive sensor, in particular a thermal-dispersion sensor or a temperature-difference sensor.

A23. Method according to any one of the preceding aspects, wherein the method is performed when the pressurized working gas system (1) is in operation.

A24. Gas leak monitoring device for a system (1) operating with pressurized working gas, optionally wherein the pressurized working gas is compressed air,
said system (1) operating with pressurized working gas comprising:
   - a pressurized gas source (2), optionally equipped with a predetermined number of compressors (3),
   - a gas distribution circuit (5) configured to be placed in fluid communication with the pressurized gas source (2),
   - a predetermined number of user devices (4) each configured to be placed in fluid communication with the gas distribution circuit (5),
wherein the monitoring device includes:
   - for at least one or for each of said user devices (4) a respective flow sensor (8) associable with a section of said gas distribution circuit (5) and configured to enable the determination of the gas flow rate directed to the respective user device (4),
   - at least one processing unit (10), in particular a programmable processing unit, configured to perform the method according to any one of the preceding aspects.

A25. Device according to the preceding aspect, wherein the distribution circuit (5) includes one or more service lines emerging from a main line, each service line being at one end connected and in fluid communication with the main line and, at an opposite end, serving a respective one of said user devices (4),
and wherein the device includes a flow sensor (8) operating on each service line to enable the determination of the gas flow rate flowing through the service line itself and directed to the respective user device (4).

A26. Device according to the preceding aspect, comprising a pressure sensor (9) operating on each service line, upstream or downstream of the respective flow sensor (8).

A27. Valve (7) comprising at least one inlet, one outlet and a member for interception or regulation of the flow between said inlet and said outlet; wherein said valve includes:
- a device according to any one of aspects A24 to A26; or
- a processing unit (10), in particular a programmable processing unit, configured to perform the method according to any one of the preceding aspects.

A28. Valve according to the preceding aspect, wherein the valve is:
of the on/off type operable between the fully open condition and a single regulation condition in closure, in which the valve determines a total closure of the flow through the valve itself, or
of the modulating type operable between the fully open condition and a plurality of regulation conditions, in which the valve determines various degrees of partial closure of the flow through the valve itself.

A29. System (1) operating with pressurized working gas, optionally wherein the pressurized working gas is compressed air, said system (1) operating with pressurized working gas including:
- a pressurized gas source (2), optionally equipped with a predetermined number of compressors (3),
- a gas distribution circuit (5) configured to be placed in fluid communication with the pressurized gas source (2),
- a predetermined number of user devices (4) each configured to be placed in fluid communication with the gas distribution circuit (5),
- a monitoring device according to any one of aspects A24 to A26 or a valve according to aspect A27 or A28 for at least one service line to one of said user devices.

A30. Software product comprising instructions which, when executed by a programmable processing unit (10), configure such programmable processing unit to perform the method according to any one of the preceding method aspects.

A31. Method, implemented by computer or by electronic circuit, for the reduction of gas leaks in a system (1) operating with pressurized working gas, optionally wherein the pressurized working gas is compressed air,
said system (1) operating with pressurized working gas comprising:
   - a pressurized gas source (2), optionally equipped with a predetermined number of compressors (3),
   - a predetermined number of user devices (4),
   - a gas distribution circuit (5) configured to be placed in fluid communication with the pressurized gas source (2) and having one or more service lines (6) each configured to serve a respective one of said user devices (4),
   - a valve (7) operating on each service line (6), said valve (7) being actuatable from a fully open condition to at least one regulation condition, in which the valve (7) determines a partial or total closure of the flow through the valve (7) itself,
   - a respective pressure sensor operating on each service line (6), downstream of said valve (7) and upstream of the user device (4), and configured to enable the determination of the pressure of the gas directed to the respective user device (4),
   - optionally a respective flow sensor (8) operating on each service line (6) and configured to enable the determination of the gas flow rate directed to the respective user device (4),
wherein the method includes the following steps performed for each of said service lines (6) using the respective valve (7), the respective pressure sensor (9) and optionally the respective flow sensor (8):
   - verifying (201) whether an information indicative of the fact that a leak is present on the service line (6) during non-use of the respective user device (4) has been received, and/or whether a leak has been detected on the service line (6) during the non-use of the respective user device (4),
   - if in the previous step said information has been received and/or said leak has been detected, controlling (202) the valve (7) from the open condition to the at least one regulation condition, causing a corresponding reduction of pressure in a section of the service line (6) between the valve (7) and the respective user device (4).

A32. Method according to aspect A31, wherein controlling (202) the valve (7) includes:
- detecting (202a), with said pressure sensor (9), the pressure in the section of the service line (6) between the valve (7) and the respective user device (4),
- driving (202c) the valve (7) in order to maintain the pressure in said section of the service line (6) greater than atmospheric pressure,
wherein the atmospheric pressure is the pressure present in the environment in which the system (1) operating with pressurized working gas operates.

A33. Method according to aspect A31 or A32, wherein the pressure sensor (9) is configured to determine an absolute pressure, and wherein the method involves determining (202b) whether or not the absolute pressure detected downstream of the valve (7) and upstream of the user device (4) is greater or not than the atmospheric pressure by at least a predetermined gap ε,
or
wherein the pressure sensor (9) is configured to detect a relative pressure with respect to the atmospheric pressure, and wherein the method involves determining (202b) whether or not the relative pressure detected downstream of the valve (7) and upstream of the user device (4) is greater than the predetermined gap ε.

The value of ε is for example equal to a value comprised between 5 and 100 millibar, in particular between 10 and 50 millibar.

A34. Method according to aspect A33, wherein the step of controlling (202) the valve (7) includes, in a first alternative:
- driving (202c1) the valve (7) into the or into a regulation condition if the determination of aspect A33 yields a positive result, while
- if the determination of aspect A33 yields a negative result, driving (202c2) the valve (7) into the open condition;
or wherein the step of controlling the valve (7) includes, in a second alternative:
- driving (202w) the valve (7) into one or more regulation conditions in order to maintain the absolute pressure detected downstream of the valve (7) equal, within a tolerance, to the atmospheric pressure plus said predetermined gap ε, or to maintain the relative pressure detected downstream of the valve (7) equal, within a tolerance, to the predetermined gap ε.

A35. Method according to any one of the preceding aspects A31 to A34, wherein receiving (201a) an information indicative of the fact that a leak is present on the service line (6) during non-use of the respective user device (4) includes:
- receiving a temporal information indicative of the fact that on the service line (6), at a given instant or in a given time interval, a leak has been detected, and/or
- receiving an information relating to a reference flow rate which identifies the presence of a leak in the service line (6).

For example, receiving (201a) an information indicative of the fact that a leak is present on the service line (6) during the non-use of the respective user device (4) may involve executing the method according to any one of aspects A1 to A23.

A36. Method according to any one of the preceding aspects A31 to A35, wherein said system (1) operating with pressurized working gas includes a flow sensor (8) for each respective service line (6), said flow sensor (8) operating upstream or downstream of the valve (7).

A37. Method according to aspects A35 and A36, wherein detecting (201b) that a leak is present on the service line (6) during non-use of the respective user device (4) includes detecting with the flow sensor (8) the flow rate through the respective service line (6) and determining that the flow rate through the service line (6) itself is equal to the reference flow rate ± a margin of acceptability, optionally equal to 10% of the reference flow rate.

A38. Method according to any one of the preceding aspects A31 to A37, wherein the valve (7) is an on/off type valve operable between the fully open condition and a single regulation condition in which the valve (7) determines a total closure of the flow through the valve itself.

A39. Method according to the preceding aspect in combination with the aspect A33, wherein if the determining step of aspect A33 yields a positive result, controlling the valve involves maintaining (202c1) the valve (7) in the regulation condition in which there is the total closure of the flow through the valve (7) and wherein if the determining step of aspect A33 yields a negative result, the step of controlling the valve involves driving (202c2) the valve (7) into the fully open condition of the valve (7).

A40. Method according to any one of the preceding aspects A31 to A37, wherein the valve (7) is a modulating valve operable between the fully open condition and a plurality of regulation conditions in which the valve (7) determines various degrees of partial closure of the flow through the valve itself, optionally wherein the regulation conditions of the modulating valve (7) also include a condition of total closure of the flow through the valve itself.

A41. Method according to aspect A40, wherein controlling (202) the valve (7) includes driving (202w) the valve (7) into one or more regulation conditions of progressive partial closure in order to bring the absolute pressure detected downstream of the valve (7), within a tolerance, to the atmospheric pressure plus a/said predetermined gap (ε), or in order to bring the relative pressure detected downstream of the valve (7), within a tolerance, to the predetermined gap (ε).

A42. Method according to any one of the preceding aspects A31 to A41, wherein controlling (202) the valve (7) includes detecting (204) the activation of the user device (4) associated with the service line (6) and the consequent demand for pressurized gas.

A43. Method according to the preceding aspect, wherein the step of detecting (204) the activation of the user device (4) is performed as follows:
- without receiving signals (from the user device (4) or from an operator) which indicate the activation of the user device (4) itself, and
- using information relating to the pressure of the gas through the service line (6) detected by the pressure sensor (9).

A44. Method according to aspect A42 or A43, wherein detecting (204) the activation of the user device (4) includes:
- determining (204a) a variation over time of the pressure detected by said pressure sensor (9),
- checking (204b) whether the value of said variation over time of the pressure detected by said pressure sensor (9), optionally the absolute value of the value of said variation over time of the pressure detected by said pressure sensor (9), is greater than a predetermined threshold Δ (for example comprised in absolute value between 0.1 and 1 bar per second).

A45. Method according to the preceding aspect, wherein determining (204a) the variation over time of the pressure detected by said pressure sensor (9) involves determining the derivative of said detected pressure over time.

A46. Method according to aspect A44 or A45, wherein if the value of said variation over time of the pressure detected by said pressure sensor (9), optionally the absolute value of the value of said variation over time of the pressure detected by said pressure sensor (9), is greater than or equal to the predetermined threshold Δ, controlling the valve (7) provides for driving (205) the valve (7) into the open condition.

A47. Method according to aspect A44 or A45 or A46, wherein if the value of said variation over time of the pressure detected by said pressure sensor (9), optionally the absolute value of the value of said variation over time of the pressure detected by said pressure sensor (9), is less than the predetermined threshold Δ, controlling the valve (7) provides for driving (202w) the valve (7) into one or more regulation conditions of partial closure in order to maintain the absolute pressure detected downstream of the valve (7) equal, within a tolerance, to the atmospheric pressure plus said predetermined gap ε, or in order to maintain the relative pressure detected downstream of the valve (7) equal, within a tolerance, to the predetermined gap ε.

A48. Method according to any one of the preceding aspects A31 to A47, wherein for each of said user devices (4) a respective flow sensor (8) is involved, operating on a section of said gas distribution circuit (5), in particular on a respective service line (6) upstream or downstream of said valve (7), and configured to enable the determination of the gas flow rate directed to the respective user device (4), and wherein verifying (201b) whether it has been detected that a leak is present on the service line (6) during non-use of the respective user device (4), includes the following steps performed for each of said user devices (4) using the respective flow sensor (8):
- verifying whether there are time intervals with stable flow rate, and
- if such time intervals with stable flow rate exist,
   ∘ identifying, among such stable flow rate time intervals, one or more relevant intervals in which the flow rate measured by said flow sensor (8) is deemed non-negligible,
   ∘ determining a value or presence of gas leak during a non-use of the user device (4) as a function of one or more flow rate values measured by said flow sensor (8) in one or more of said relevant intervals.

A49. Method according to any one of the preceding aspects A31 to A48, wherein the flow sensor (8) is sensitive to low flow rates comprised between 0 Nm³/h and 1 Nm³/h, optionally wherein the flow sensor (8) is a thermal sensor, for example a thermal-dispersion sensor or a temperature-difference sensor.

A50. Method according to any one of the preceding aspects A31 to A49, wherein the method is performed while the system (1) operating with pressurized working gas is in operation.

A51. Method according to any one of the preceding aspects A31 to A50, wherein such method is performed in combination with the method according to any one of aspects A1 to A23.

A52. Method according to any one of the preceding aspects A31 to A51, wherein such method is performed subsequently to the method according to any one of aspects A1 to A23.

For example, in accordance with a further aspect, the leak reduction method according to any one of aspects A31 to A51 may be executed after the method according to any one of aspects A1 to A23 has signaled the presence of a leak on one or more service lines, in the absence of use by the respective user device.

A53. Method according to any one of the preceding aspects A31 to A52, wherein such method is performed at regular intervals or continuously, and wherein the method according to any one of aspects A1 to A23 is also performed at regular intervals or continuously.

A54. Gas leak reduction device for a system (1) operating with pressurized working gas, optionally wherein the pressurized working gas is compressed air,
said system (1) operating with pressurized working gas comprising:
   - a pressurized gas source (2), optionally equipped with a predetermined number of compressors (3),
   - a predetermined number of user devices (4),
   - a gas distribution circuit (5) configured to be placed in fluid communication with the pressurized gas source (2) and having one or more service lines (6) configured each to serve a respective one of said user devices (4),
wherein the device includes, for at least one or for each of said service lines (6):
   - a valve (7) operating on each service line (6), said valve (7) being actuatable from a fully open condition to at least one regulation condition, in which the valve (7) causes a partial or total closure of the flow through the valve itself,
   - a respective pressure sensor (9) operating on each service line (6), downstream of said valve (7) and upstream of the user device (4), and configured to enable the determination of the pressure of the gas directed to the respective user device (4),
   - optionally a respective flow sensor (8) operating on each service line (6) and configured to enable the determination of the gas flow rate directed to the respective user device (4),
and wherein the device further includes:
   - at least one processing unit (10), in particular a programmable processing unit, operatively connected to the valve (7), the pressure sensor (9) and, if present, the flow sensor (8), wherein the processing unit (10) is configured to perform the method according to any one of the preceding method aspects A1 to A23 and A31 to A53.

A55. Valve (7) comprising at least one inlet, one outlet and a member for interception or regulation of the flow between said inlet and said outlet; wherein said valve includes at least one processing unit (10), in particular a programmable processing unit, operatively connected to the pressure sensor (9) and, if present, to the flow sensor (8), wherein the processing unit (10) is configured to perform the method according to any one of the preceding method aspects A1 to A23 and A31 to A53.

A56. Valve according to the preceding aspect, wherein the valve is:
of the on/off type operable between the fully open condition and a single regulation condition in closure, in which the valve determines a total closure of the flow through the valve itself,
or of the modulating type operable between the fully open condition and a plurality of regulation conditions, in which the valve determines various degrees of partial closure of the flow through the valve itself.

A57. System (1) operating with pressurized working gas, optionally wherein the pressurized working gas is compressed air, said system (1) operating with pressurized working gas comprising:
- a pressurized gas source (2), optionally equipped with a predetermined number of compressors (3),
- a predetermined number of user devices (4),
- a gas distribution circuit (5) configured to be placed in fluid communication with the pressurized gas source (2) and having one or more service lines (6) configured each to serve a respective one of said user devices (4), and
- for at least one service line to one of said user devices (4) a device according to aspect A51 or a valve according to aspect A52 or A53.

A58. Software product comprising instructions which, when executed by a programmable processing unit (10), configure such programmable processing unit to perform the method according to any one of the preceding method aspects A1 to A23 and A31 to A53.

### Description of figures

Further features and advantages of the invention will be further described with reference to the accompanying figures, in which:

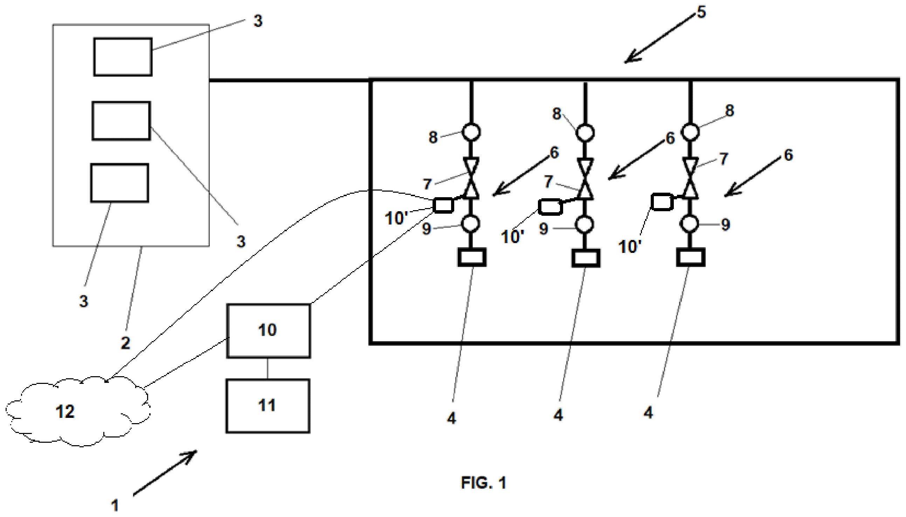

- figure 1 schematically shows a system operating with pressurized working gas, in particular but not limiting thereto a compressed air system, on which gas leak monitoring, gas leak reduction or both gas leak monitoring and reduction can be performed in accordance with aspects of the invention; in particular, as better described below, the system of figure 1 is a non-limiting example capable of performing both leak monitoring and leak reduction: if instead the system were configured to perform only one of the two functions, not all of the components present in the system of figure 1 would be necessary;
- figure 2 shows a block diagram representative of a method implemented by computer for monitoring gas leaks, exemplarily performed on the system of figure 1;
- figure 2A shows a block diagram of an additional procedure in accordance with an aspect of the method implemented by computer for monitoring gas leaks, exemplarily performed on the system of figure 1;
- figure 3 shows a block diagram representative of a first variant of a method implemented by computer for the reduction of gas leaks, exemplarily performed on the system of figure 1; it is noted that the method of figure 3 may be executed in combination with and following the method of figure 2;
- figure 4 shows a block diagram representative of a second variant of a method implemented by computer for the reduction of gas leaks, exemplarily performed on the system of figure 1; it is noted that the method of figure 4 may be executed in combination with and following the method of figure 2;
- figure 4a shows a block diagram representative of a part of the method of figure 4;

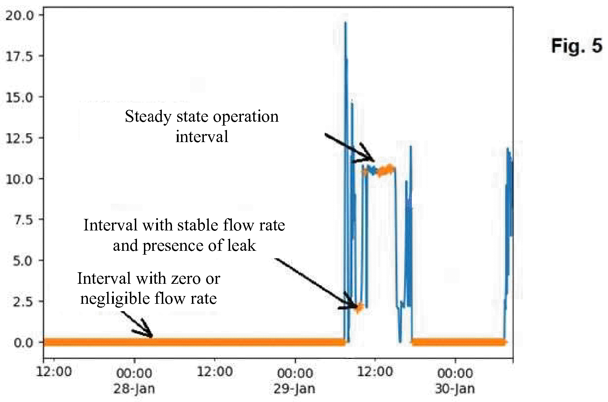

- figure 5 shows a Cartesian diagram representing the flow rate measured in a service line as a function of time, in which the abscissa represents time in hours and the ordinate represents the flow rate in Nm³/h (normal cubic metres per hour). This figure serves to indicate the stationary operating intervals which are identified with the method in accordance with aspects of the invention.

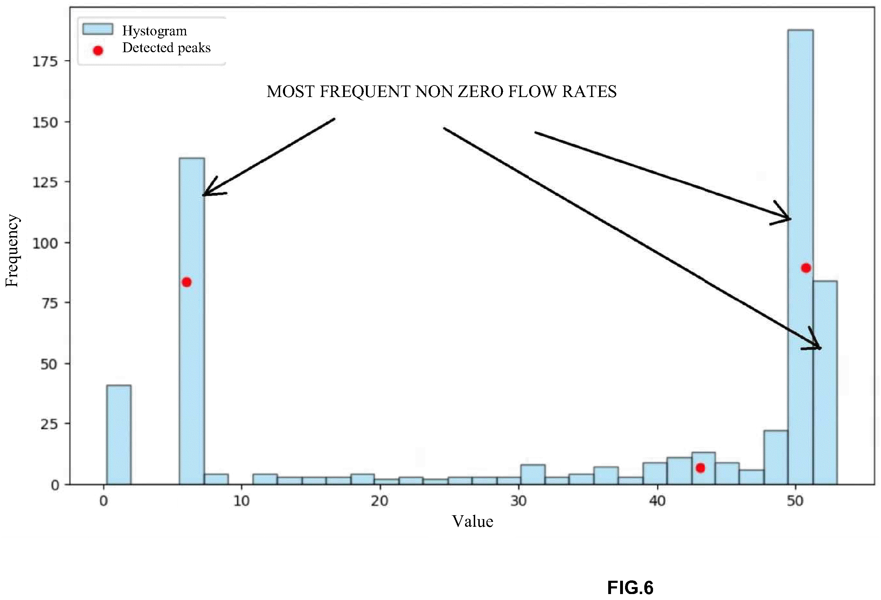

- figure 6 is a histogram of the flow rate distribution with the frequency peaks identified (apart from the one for flow rate = 0). The flow rate values are reported on the x-axis of the abscissas, while the frequency values for each rectangle (or bin) of the histogram relating to a respective range of flow rates are reported on the y-axis of the ordinates. The dot marked in each rectangle (or bin) indicates the positive peaks of the distribution. The flow rate values on the x-axis of the abscissas at the dots are the local maximum values of the distribution, and are the flow rate values with the highest frequency, which therefore occur most often.

### Detailed description of the invention

Before illustrating in detail the methods for monitoring and reducing gas leaks and relating devices, a compressed air system or other pressurized working gas system, identified in figure 1 with reference number 1, is described below. The methods herein described can find application for example for the monitoring and/or reduction of leaks in the system 1. Furthermore, as will be better described below, the system 1 may comprise a device for the monitoring and/or reduction of leaks in accordance with what is herein described.

In particular, in accordance with aspects of the invention, it may be provided to perform only the monitoring method (for example as described in the aspects A1 to A23 shown above) or only the leak reduction method (as described in the method aspects subsequent to A31), or to perform the two methods (for example performing the monitoring method and then the leak reduction method which may be for example initiated following the determination of a leak in the absence of use of the user device detected with the monitoring method). Analogously, the systems and devices herein described may be configured to perform one of the two methods or both.

The system 1 may be a compressed air plant arranged to supply compressed air to a plurality of user devices which by way of example may include:
- pneumatic cylinders or actuators,
- pneumatic manipulators,
- pneumatic conveyor systems,
- instruments powered by compressed air,
- pneumatic tools,
- blowing systems,
- other equipment with pneumatic power supply.

The system 1 of figure 1 includes a pressurized gas source 2, for example equipped with one or more compressors 3, and one or more user devices 4, to which the pressurized gas is delivered. The system 1 also includes a gas distribution circuit 5 configured to be placed in fluid communication with the pressurized gas source 2 and having one or more service lines 6 configured each to serve a respective one of the user devices 4. It is to be noted that in figure 1 the distribution circuit 5 has an annular shape, as is typical of compressed air distribution circuits; however, it is not excluded that said circuit may have a different shape: for example, in an alternative not shown, the distribution circuit may include a main distribution line to which the various service lines are connected in parallel.

As shown in figure 1, the plant 1 includes, for each of the service lines 6, the following components which will then be shown in greater detail:
- a valve 7 operating on each service line 6 (this component, which is useful for implementing the leak reduction method described below, is not strictly necessary for implementing the leak detection method also described below);
- a flow sensor 8 operating on each service line and configured to enable the determination of the gas flow rate directed to the respective user device 4; this component can operate upstream or downstream of the valve 7;
- a pressure sensor 9 operating on each service line, for example positioned downstream of the valve 7 and upstream of the user device 4, and configured to enable the determination of the pressure of the gas directed to the respective user device;
- at least one processing unit 10, 10', 12, in particular a programmable processing unit.

It is to be noted that in figure 1 it is shown the option in which a "central" processing unit 10 is present which is able to communicate with all the sensors of the system 1 described above and with the active components, for example the valve 7 present in each service line, and with the pressurized gas source 2. However, in an actually preferred embodiment, the use of an electronic board 10' on board each valve 7 may be provided (i.e. a local processing unit operatively associated with each valve 7 or with each line 6) and configured to receive the detection data/signals from each flow sensor 8 and/or from each pressure sensor 9 present in each respective service line 6. In particular, it is directly connected to all the installed sensors and is responsible for the acquisition of the signals coming from each of them, performing their conversion into digital measurements interpretable by a digital processing unit. In this way, the board acts as a collection and centralization unit for all the information/signals detected by the sensors present in each line 6.

Furthermore, each electronic board 10' may comprise a respective processing unit (for example digital) configured to execute in part or as a whole the gas leak monitoring method and/or the gas leak reduction method: for example, each electronic board 10' may comprise a respective processing unit configured at least to execute the algorithms dedicated to the identification of compressed air leaks, which form an integral part of the process described in the present patent. Such algorithms may be coded and resident on the board (i.e. the programs relating to such algorithms may be stored in memories present in each board), which is directly responsible for their local execution.

A further function of each electronic board 10' is the transmission of the acquired and processed data to an external gateway, which in turn is responsible for the transmission of the data to a cloud infrastructure 12 for storage and remote analysis. It is to be noted that the cloud infrastructure (also provided with one or more processing units or computers with respective memories), could in a further alternative be configured to receive the data from the above mentioned sensors 8 and 9 of each line and execute the gas leak monitoring method, the gas leak reduction method, or both the gas leak monitoring and reduction methods, in accordance with aspects of the invention.

The valve 7 may in a first variant be an on/off type valve operable between the fully open condition and a single regulation condition in closure, in which the valve determines a total closure of the flow through the valve itself. Alternatively, the valve 7 may be a modulating valve operable between the fully open condition and a plurality of regulation conditions, in which the valve determines various degrees of partial closure of the flow through the valve itself: in other words, the valve 7 may include a shutter positionable in a plurality of operating positions, providing the maximum opening condition and numerous partial opening conditions wherein the dimensions of the fluid passage opening progressively decrease; the modulating valve 7 may also have a condition of total closure of the flow through the valve itself. The flow sensor 8 operating on each service line may be positioned upstream or downstream of the valve 7 and be capable of enabling the determination of the gas flow rate directed to the respective user device 4, even in the presence of relatively low flow rates. For example, the flow sensor may be sensitive to low flow rates comprised between 0 Nm³/h and 1 Nm³/h. In accordance with an actually preferred solution, the flow sensor is a thermal sensor, for example a thermal-dispersion sensor or a temperature-difference sensor. However it is not excluded that the flow sensor may be of yet a different nature, for example a pressure-variation sensor through a section of the service line, or a mechanical sensor, or a sensor of yet another nature, provided that it is sufficiently sensitive.

The pressure sensor 9 is, as mentioned, operating on each service line, downstream of the valve 7, so as to enable the determination of the pressure in the tract of the service line between the valve 7 and the user device 4.

As already mentioned, the processing unit 10 and/or each unit 10' is/are operatively connected to the valve to control its operation, to the pressure sensor in order to receive therefrom detection signals of the pressure of the gas in the service line, and to the flow sensor in order to receive therefrom detection signals of the flow of the gas through the service line. As mentioned, the processing unit 10 as well as the processing unit of each board 10' may be digital-type units comprising one or more CPUs and relating memories. However, in principle such processing units may include analog-type circuits or a combination of digital-type units with analog-type circuits.

Furthermore, although in some embodiments herein described the processing unit is distinct from the control unit or units that command the entire system 1, it is not excluded that the processing unit 10 may be part of a general controller in charge of controlling the compressors and any other sensors or actuators of the system 1. The unit 10 or the units 10' may furthermore communicate with one or more user interfaces 11 configured to enable the display of data or the input of commands.

After the description provided above in a mainly structural meaning, a method for monitoring gas leaks applicable to the system 1 is shown below, in accordance with an aspect of the invention. The method described herein is computer-implemented, for example by the processing unit 10 or by the boards 10', or by the boards 10' in cooperation with the central processing unit 10 or with one or more other processing units operatively communicating with the electronic boards 10'.

In particular, the monitoring method described herein is useful for the determination of leaks from each service line 6, during the non-use of the respective user device 4, that is, when the user device is deactivated or in stand-by, a situation in which under ideal conditions there should be no leaks.

It is noted that the description that follows shows the steps of the monitoring method in relation to a service line 6 and a respective user device 4: where a plurality of lines 6 are present the described steps can be applied to each service line 6 and respective user devices 4.

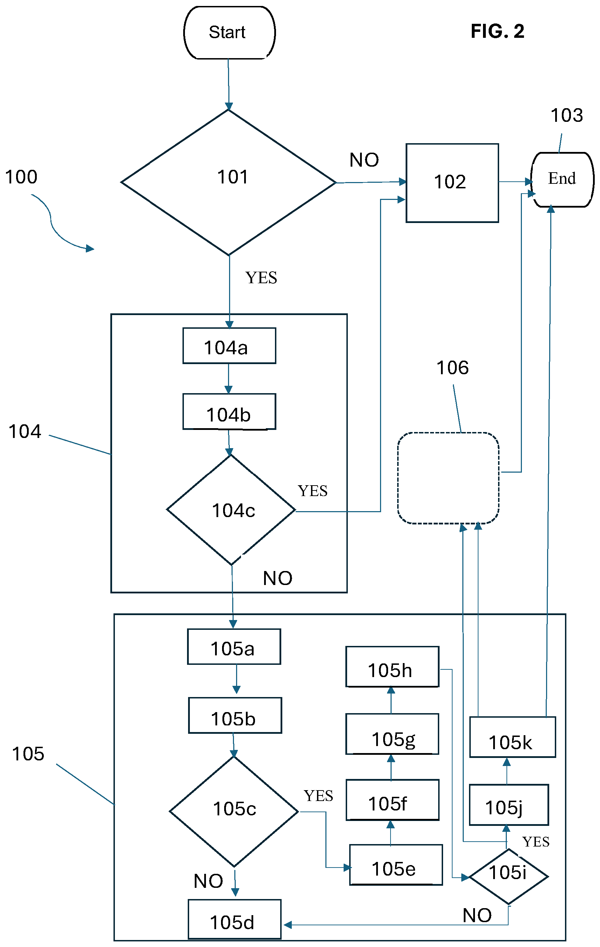

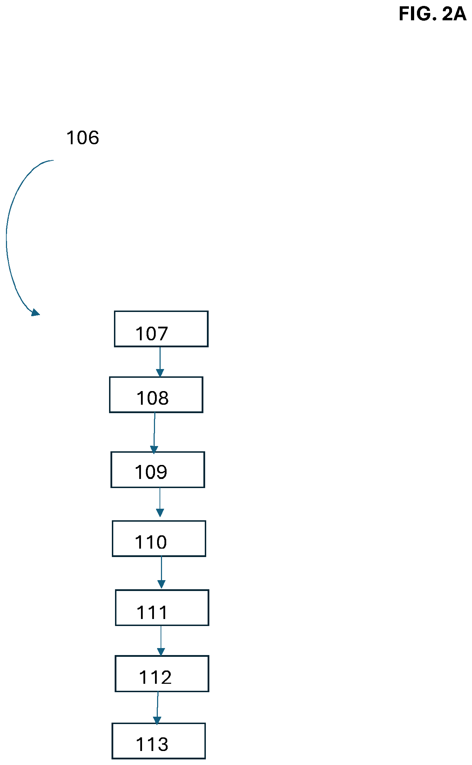

In the description of the monitoring method, reference will be made to the block diagram of figure 2, wherein the method is globally indicated with reference number 100.

The method 100 implemented by computer for monitoring gas leaks (for example compressed air) includes the steps described below. It is noted that the method may be performed by analyzing in real time the flow rate detected by the sensor 8 and its variation in time, or by examining the historical record of the diagram of the flow rate detected by the sensor 8 over time. Moreover, the method may be performed continuously or repeated at regular intervals or performed upon receipt of a given command for example sent to the processing unit 10.

Initially (step 101), the method 100 involves verifying, using the flow sensor 8, if with reference to the flow rate along the line 6 there are time intervals with stable flow rate.

According to an aspect, a time interval is deemed to be a time interval with stable flow rate if the flow rate measured by said flow sensor during such time interval has a variation in time below a predetermined stability threshold: for example a time interval may be deemed to be a time interval with stable flow rate if the derivative of the measured flow rate in time is in absolute value below a threshold value comprised in a range from a minimum of 0.007 Nm³/h to a maximum of 0.7 Nm³/h (the selected threshold value may change depending on the data set).

In a preferred form, a time interval with stable flow rate is deemed as such if, furthermore, such time interval in which the flow rate is stable has a duration greater than a predetermined minimum duration, optionally of at least 5 minutes.

If, following step 101 of verifying whether there are time intervals with stable flow rate, it is determined that there are no time intervals with stable flow rate (output NO from block 101 in figure 1), the method concludes, at step 102, that there are no gas leaks during the non-use of one or more of said user devices and the process is stopped (step 103). Step 102 may also involve generating a signal, for example acoustic and/or graphical to a user interface, for example to an interface 11 operatively connected with the processing unit 10, signaling the circumstance that no intervals of stable flow rate have been identified and that therefore no leaks have been detected.

If, conversely, it is detected that there are time intervals with stable flow rate (output YES from block 101), the method 100 involves identifying (step 104), among such time intervals with stable flow rate, one or more relevant time intervals wherein the flow rate measured by said flow sensor is deemed non-negligible. Step 104 can include various sub-steps shown below. For example, according to an aspect, step 104 of the method 100 involves:
- identifying (sub-step 104a) among such time intervals with stable flow rate whether there are time intervals with negligible flow rate; for example, this sub-step may involve determining an average flow rate Φ_{i_mean} in each of the time intervals with stable flow rate, and for deeming that the flow rate measured by said sensor 8 in a time interval with stable flow rate is to be considered negligible if the average flow rate Φ_{i_mean} in such time interval with stable flow rate is zero or below a minimum value for example below 0.1 Nm³/h,
- eliminating (sub-step 104b) such time intervals with negligible flow rate which therefore are not considered in the identification of the possible relevant intervals as they relate to situations in which for example the user device 4 is not active and therefore does not consume air without otherwise having leaks or having negligible leaks,
- verifying (sub-step 104c) whether the only time intervals with stable flow rate are those with negligible flow rate, concluding that in such case (output YES from block 104c) there are no gas leaks during the non-use of one or more of said user devices (returning to step 102); if, conversely, time intervals with stable and non-negligible flow rate remain, the method concludes that in such case (output NO from block 104c) relevant intervals are present.

At this point the method involves step 105 of determining the value of the gas leak during the non-use of the user device 4. According to a currently preferred embodiment, step 105 of determining the value of the gas leak involves determining such value as a function of a plurality of flow rate values measured by the flow sensor considering the relevant intervals identified as shown above.

It should be noted, however, that the presence of intervals of stable flow rate identified as described above does not guarantee that in all such stable intervals there is a leak: for example they could be intervals in which the system 1 operates in a stationary regime and/or in which one or more lines subjected to monitoring are conveying air at constant flow rate towards the respective user device. In order to efficiently discriminate situations of leak in the absence of actuation of the user device from situations in which the user device operates with stable flow rate, without otherwise any need to receive information from the user device, the method advantageously involves operating as described below.

In greater detail, step 105 may for example include the following sub-steps:
- determining (if not already available) the average flow rate Φ_{i_mean} in each of the relevant intervals (sub-step 105a),
- comparing the average flow rates Φ_{i_mean} of each relevant interval with each other and determining whether such average flow rates Φ_{i_mean} of each relevant interval deviate from each other beyond a predetermined acceptability criterion (sub-step 105b),
- verifying whether (sub-step 105c) the average flow rates Φ_{i_mean} of each relevant interval deviate from each other beyond said predetermined acceptability criterion and, in the negative case (output NO from block 105c), concluding that the relevant intervals are all intervals in which gas leak during the non-use of the user device is present, and
- calculating the value of such gas leak as a function of the average flow rates Φ_{i_mean} of each relevant interval (sub-step 105d). In accordance with an aspect, sub-step 105d may, for example, involve determining an arithmetic mean Φₘₑₐₙ of the average flow rates Φ_{i_mean} of each relevant interval, and calculating the gas leak value during the non-use of the user device as equal to the mean Φₘₑₐₙ of said average flow rates Φ_{i_mean} of each relevant interval.

If, conversely, following sub-steps 105a, 105b and 105c, it is detected that the average flow rates Φ_{i_mean} of each relevant interval deviate from each other beyond said predetermined acceptability criterion (output YES from block 105c in figure 2), the method may involve carrying out a further in-depth analysis. In greater detail, the method may in such case involve the following further sub-steps;
- having defined a plurality of consecutive flow rate intervals, for example intervals of 2 or 3 or 4 or 5 Nm³/h of width each (in the case of intervals of width equal to 2 Nm³/h, the first interval will be from 0 to 2 Nm³/h, the second from 2 to 4 Nm³/h and so on up to covering the entire spectrum of possible flow rates in Nm³/h), the method involves determining (sub-step 105e) the flow rate values that fall within each of said consecutive intervals, for example by constructing the histogram of figure 6 which is representative of the distribution of the measured flow rate values that fall within each of the consecutive intervals, where each "bin" or rectangle in the histogram of figure 6 corresponds to a respective one of said consecutive intervals and has a height proportional to the number of flow rate values that fall within the respective consecutive interval (in other words, the higher bins or rectangles are those relating to the flow rate intervals where the measured flow rate values fall most frequently); the dot marked in each rectangle (or bin) indicates the positive peaks of the distribution: therefore the flow rate values on the x-axis of the abscissas at the dots are the local maximum values of the distribution, and are the flow rate values with the highest frequency, which therefore occur most often;
- at this point the method provides for identifying (sub-step 105f) which are the "bins" that is the rectangles of the histogram that have a greater number of flow rate values (that is, which are the highest "bins" or rectangles where flow rate values fall most frequently), apart from the bin/rectangle relating to a "zero or negligible" flow rate; in other words it is identified which are the most frequent flow rate values (see again figure 6), as they will in turn correspond to fairly stationary operations and not to transients;
- from the "bins" or rectangles representative of the most frequent flow rate values (which therefore in figure 6 are those with relatively high height), the method then involves selecting (sub-step 105g) the most frequent peak values (Φₚₑₐₖ) of the flow rate (that is those which recur most often and which therefore could be representative of leaks); the most frequent flow rate values will in turn correspond to fairly stationary operations and not to transients. Of these peak values, the lowest non-zero value is taken (since the other peak values could correspond to stationary operations but not to leaks), which is identified here with the minimum peak value (of flow rate) Φ_{peak_min};
- the method then involves comparing (sub-step 105h) the minimum peak value Φ_{peak_min} with the arithmetic mean Φₘₑₐₙ of the average flow rates Φ_{i_mean} of each relevant interval;
- the method then involves determining (sub-step 105i) whether the minimum peak value Φ_{peak_min} and said mean Φₘₑₐₙ deviate from each other beyond a predetermined margin of tolerance,
   and
   ∘ if (output NO from the block relating to sub-step 105i) the minimum peak value Φ_{peak_min} and said mean Φₘₑₐₙ do not deviate from each other beyond the predetermined margin of tolerance, concluding (returning to sub-step 105d) that the relevant intervals are all intervals in which gas leak during the non-use of one or more of said user devices is present, and the value of said gas leak is a function of the average flow rates Φ_{i_mean} of each relevant interval, optionally equal to the mean Φₘₑₐₙ of said average flow rates Φ_{i_mean} of each relevant interval,
   ∘ if (output YES from the block relating to sub-step 105i), conversely, the minimum peak value Φ_{peak_min} and said mean Φₘₑₐₙ deviate from each other beyond the predetermined margin of tolerance, the method involves selecting (sub-step 105j) the relevant intervals having the respective average flow rate Φ_{i_mean} in a predetermined neighborhood close to the minimum peak value Φ_{peak_min}, concluding (sub-step 105k) that such selected relevant intervals are intervals in which gas leak during the non-use of one or more of said user devices is present, and the value of said gas leak is equal to the minimum peak value Φ_{peak_min}.

Once the relevant interval or intervals have been identified in which there is a leak in conditions of non-use of the user device, and once the value of such leak has been determined as described, such information can be signaled by the processing unit 10 acoustically and/or graphically through the interface 11.

In a variant, the method may at this point terminate (block 103): in this first case, therefore, there is no need to use a pressure sensor on the service lines 6.

As will be explained below, the method 100 may however implement a further auxiliary procedure 106 aimed at taking into account possible different pressure supply regimes. In this case, the presence of a pressure sensor is necessary: for example, the pressure sensor 9 already described above may be used, or a pressure sensor operating upstream of the flow sensor 8, or a pressure sensor operating upstream of the valve 7 (in case the valve 7 is present, which as already mentioned is not strictly necessary for the implementation of the gas leak monitoring method 100).

It is indeed to be noted that the relevant intervals not selected in step 105, for example during sub-step 105c or sub-step 105j, may be stationary intervals, that is time intervals with stable flow rate that correspond to stationary operation of the system operating with pressurized working gas without leaks, or they may be intervals in which the flow (although being due to a leak without use of the user device) has resulted markedly different from the minimum peak Φ_{peak_min} owing to the effect due to the supply pressure: in fact, if in a given time interval the source of compressed air 2 supplies fluid at relatively high pressure, it is evident that the flow rate of any leaks would consequently be greater compared with situations in which the source 2 supplies fluid at relatively low pressure.

To this end, in accordance with a further aspect of the invention the method 100 includes the auxiliary procedure 106, schematically shown in figure 2 and shown in detail in the block diagram of figure 2A, aimed at correcting the measured flow rate as a function of the pressure prevailing in the service line. The procedure 106 is inserted, for example, at the output of sub-step 105i (output YES), or at the output of sub-step 105j, or at the output of sub-step 105k, in order to select also some intervals which would not be selected in the absence of the procedure 106.

As already mentioned, the procedure 106 of the method 100 uses the pressure sensor 9 or alternatively a dedicated pressure sensor operative on each service line, upstream or downstream of the respective flow sensor 8. The procedure 106 involves (see figure 2A):
- determining a relative pressure Prᵢ between the fluid in the service line 6 (in particular in each service line) and an outdoor environment at atmospheric pressure (step 107),
- determining the mean value Pr_{0_mean} of said relative pressure during one or more of said relevant intervals wherein gas leak during the non-use of the user device has been determined to be present (step 108),
- determining the mean value Prᵢ₋ₘₑₐₙ of said relative pressure during each of said unselected relevant intervals (step 109),
- for each unselected relevant interval, calculating (step 110) a respective corrected average flow rate Φ_{i_corr} as a function of:
   ▪ one or more of the average flow rates Φ_{i_mean} of each relevant interval wherein gas leak during the non-use of the user device has been determined to be present, optionally as a function of the mean Φₘₑₐₙ of said average flow rates Φ_{i_mean} of each relevant interval wherein gas leak during the non-use of the user device is present,
   ▪ said mean value Pr_{0_mean} of relative pressure during one or more of said relevant intervals wherein gas leak during the non-use of the user device has been determined to be present,
   ▪ said mean value Prⱼ₋ₘₑₐₙ of said relative pressure during each of said unselected relevant intervals.

In greater detail, the procedure 106 involves calculating the respective corrected average flow rate Φ_{i_corr} for each unselected relevant interval (besides, as already said, calculating it as a function of one or more of the average flow rates Φ_{i_mean} of each relevant interval wherein gas leak during the non-use of the user device has been determined to be present, or as a function of the mean Φₘₑₐₙ of said average flow rates Φ_{i_mean}) as a function of the ratio between Prⱼ₋ₘₑₐₙ and Pr_{0_mean} and more particularly as a function of the square root of such ratio.

More in detail the ratio may be of the type:${ϕ}_{i_corr} = f {\left({Pr}_{j - mean}{/ Pr}_{0 _mean}\right)}^{1 / 2} .$

Through a calibration procedure the specific ratio "f" that allows to calculate the corrected average flow rate Φ_{i_corr} for each unselected relevant interval as a function of Prⱼ₋ₘₑₐₙ and Pr_{0_mean} may be determined for each solution.

At this point, if the minimum peak value Φ_{peak_min} and said mean Φₘₑₐₙ deviate from each other beyond the predetermined margin of tolerance (that is if the test of sub-step 105i is satisfied, output YES), the procedure 106 involves:
- selecting (step 112) also the relevant intervals previously not selected in sub-step 105j if having a corrected average flow rate Φ_{i_corr} in a predetermined neighborhood close to the minimum peak value Φ_{peak_min} and
- concluding (step 113) that:
   ∘ such relevant intervals previously not selected are also intervals in which gas leak during the non-use of the user device is present,
   ∘ the value of said gas leak is equal to the minimum peak value Φ_{peak_min}, in particular corrected to take into account the relative pressure, for example using the mean value Prⱼ₋ₘₑₐₙ of said relative pressure during each of said unselected relevant intervals, as described above.

By way of example, determining whether the minimum peak value (Φ_{peak_min}) and said arithmetic mean (Φₘₑₐₙ) deviate from each other beyond a predetermined margin of tolerance may involve verifying whether a difference between the minimum peak value (Φ_{peak_min}) and the arithmetic mean (Φₘₑₐₙ) is in absolute value less than 15% of the arithmetic mean (Φₘₑₐₙ), or whether a ratio between the minimum peak value (Φ_{peak_min}) and the arithmetic mean (Φₘₑₐₙ) is comprised between 0.85 and 1.15.

Still by way of example the predetermined neighborhood of the minimum peak value (Φ_{peak_min}) may be defined as the minimum peak value (Φ_{peak_min}) ± 10% of the minimum peak value itself.

The remaining intervals of stable flow rate, if any, are discarded and not deemed intervals of leaks with the user device in stand-by and therefore the procedure 106 and the method 100 conclude (block 103).

In relation to the aspect described above aimed at taking into account the effect due to the supply pressure, instead of recovering relevant intervals previously not selected (discarded in the initial steps of the method precisely due to the effect of the supply pressure that may for example have risen) it is possible to use from the beginning a "normalized flow rate" calculated taking into account the relative pressure for example before or at step 105a: in other words the value of the average flow rate Φ_{i_mean} is determined in each of the relevant intervals corrected taking into account the relative pressure existing at the time of the flow rate measurement (or a reference mean value of such relative pressure). Then, on such normalized pressure, the various steps of the method 100 described above are performed, including all the sub-steps of step 105 and the relevant sub-steps (stationarity, possible distribution, and so on), but without the procedure 106, since the value identified for the various flow rates used in the method 100 is already a normalized value that takes into account the effect due to the supply pressure.

Once the intervals where leaks occur in conditions of non-use of the user device have been determined, the invention may involve the implementation of the method 200 of leak reduction described below. It is however to be noted that the leak reduction method 200 described below may also be implemented independently of the leak monitoring method previously shown. In fact, the leak reduction method 200 described below may be combined with any known method of determining leaks in a service line or in a compressed gas circuit or may intervene simply by receiving as input one or more data or information relating to the presence and extent of leaks as described below.

The method 200 is applicable to the system 1 and includes the steps described below, which are performed for each of said service lines 6 using the respective valve 7, the respective pressure sensor 9 and the respective flow sensor 8.

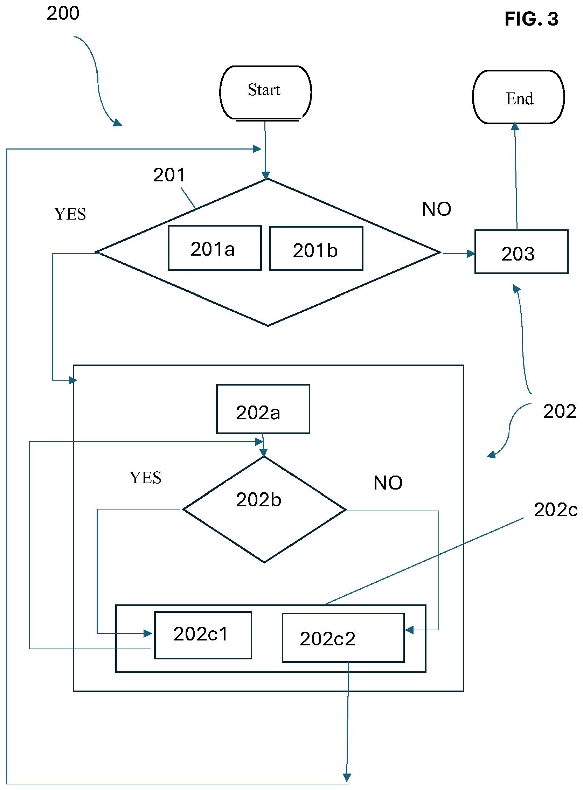

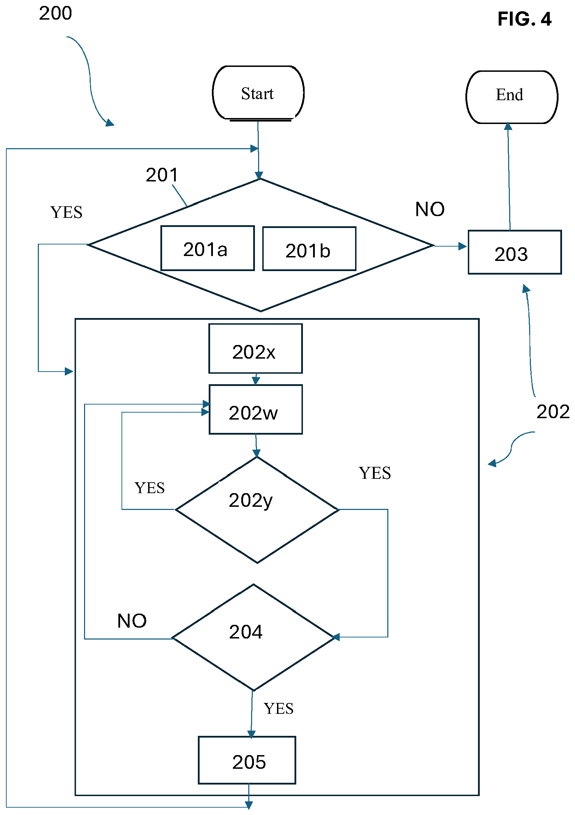

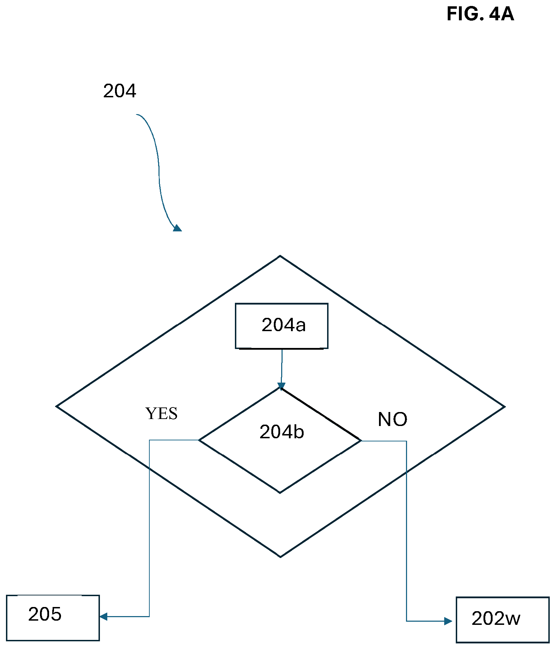

It is to be noted that the valve 7 operative on each service line is operable from a fully open condition to at least one regulation condition, in which the valve determines a partial or total closure of the flow through the valve itself. In the attached figures 3 and 4 are described two variants of the method which differ from each other in the type of valve 7 used and consequently in some steps of the method 200, as better described below.

In accordance with a general aspect, the method 200 involves verifying (step 201) whether on the service line 6 there is a leak during the non-use of the respective user device 4: such step may involve receiving (sub-step 201a) information indicative of the fact that on the service line 6 there is a leak during the non-use of the respective user device 4. For example, the information indicative of the fact that on the service line there is a leak during the non-use of the respective user device may be temporal information indicative of the fact that on the service line, at a given instant or in a given time interval, a leak has been detected, and/or information relating to a reference flow rate that identifies the presence of a leak in the service line.

Alternatively, step 201 may involve detecting (sub-step 201b) that on the service line 6 there is a leak during the non-use of the respective user device 4. For example, detecting that on the service line there is a leak during the non-use of the respective user device may involve detecting with the flow sensor 8 the flow rate flowing through the respective service line 6 and determining that the flow rate flowing through the same service line is equal to the reference flow rate ± a margin of acceptability, optionally equal to 10% of the reference flow rate.

In another example, the detection of the leak may be performed using the method 100 previously described which may be performed for example periodically.

Following the detection or the signaling of the presence of the gas leak (output YES from the block of Figures 3 and 4 representative of step 201), the method 200 then involves controlling (step 202) the valve 7 from the open condition to the regulation condition or to one of a plurality of regulation conditions, causing a corresponding reduction of pressure in a portion of the service line between the valve 7 and the respective user device 4 and therefore a reduction in the flow rate of the leak.

If, conversely, from step 201 the absence of leaks is verified (output NO from the block of figure 3 and figure 4 representative of step 202), the valve 7 is left open or is opened (step 203 in figure 3 and in figure 4) and the method concludes.

Returning to step 202 of controlling the valve 7, it may include various sub-steps described below firstly with reference to the variant of figure 3 and subsequently with reference to the variant of figure 4.

In the case of figure 3 the method uses a valve 7 of the ON/OFF type operable between the fully open condition and a single regulation condition in which the valve determines a total closure of the flow through the valve itself.

As shown in figure 3, step 202 involves detecting, with the pressure sensor 9, the pressure in the tract of the service line 6 between the valve 7 and the respective user device 4 (sub-step 202a).

It is to be noted that the pressure sensor 9 may be configured to determine absolute pressure: in such case, the method 200 involves determining, at sub-step 202b, whether the absolute pressure detected downstream of the valve and upstream of the user device is greater or not than the atmospheric pressure by at least a predetermined gap ε; alternatively the pressure sensor may be configured to detect a relative pressure with respect to atmospheric pressure, and in such case sub-step 202b of the method 200 involves determining whether the relative pressure detected downstream of the valve and upstream of the user device is greater or not than the predetermined gap ε. It is noted that by atmospheric pressure is intended the pressure present in the outdoor environment adjacent to the system 1 in which the same system operating with pressurized working gas operates.

Step 202 of controlling the valve 7 involves in particular driving the valve 7 (sub-step 202c) in order to reduce the pressure as much as possible, while nevertheless keeping the pressure in the tract of the service line between the valve 7 and the user device 4 greater than the atmospheric pressure.

To this end, the sub-step 202c of the variant of figure 3 involves:
- driving the valve 7 to the regulation condition (option 202c1 in figure 3) which is of total closure if the determination of sub-step 202a yields a positive result (output YES from the block of sub-step 202a), whereas
- if the determination of sub-step 202b yields a negative result (output NO from the block of sub-step 202a), driving the valve to the open condition (option 202c2 in figure 3).

Following the conclusion of step 202, if the valve 7 has been closed (option 202c1 in figure 3), the method involves reiterating the verification of sub-step 202b, thus repeating the cycle comprising sub-steps 202b and 202c; if, conversely, at the conclusion of step 202 the valve 7 has been opened (option 202c2 in figure 3), the method involves returning to the step of verifying (step 201) whether on the service line 6 there is a leak, thus reiterating steps 201 and 202 described, or moving on to step 203 of opening the valve 7, if there is no leak.

The method 200 described may be reiterated periodically, or activated by command, or self-activated upon receipt or detection of a leak.

In the variant of the method 200 of figure 4, the valve 7 used is of the type that can be modulated over multiple conditions of partial opening. In other words, the valve 7 of the modulating type is operable between the fully open condition and a plurality of regulation conditions in which the valve determines various degrees of partial closure of the flow through the valve itself; optionally the regulation conditions of the modulating valve also include a condition of total closure of the flow through the valve.

Steps 201 and 203 may be as already described in relation to the variant of figure 3 and are therefore not repeated.

In the variant of figure 4, however, step 202 of controlling the valve 7 involves a sub-step 202x of receiving or setting a gap ε (which may have a value equal to that used for the variant of figure 3). Sub-step 202x may also include the receiving or setting of at least a predetermined threshold Δ that will be used in recognizing the activation of the user device 4, as will be better shown below.

Step 202 of controlling the valve 7 further includes a sub-step 202w of driving the modulating valve 7 in conditions of progressive closure in order to bring the absolute pressure detected downstream of the valve 7, save for a tolerance, to atmospheric pressure plus the predetermined gap ε (or to bring the relative pressure detected downstream of the valve 7, save for a tolerance, to the predetermined gap ε).

The step of controlling the valve 7 also involves verifying at sub-step 202y whether the absolute pressure detected downstream of the valve 7 and upstream of the user device 4 has actually reached the desired value or is greater than atmospheric pressure + the gap ε (i.e. whether the relative pressure detected downstream of the valve and upstream of the user device is greater or not than the gap ε). If the pressure is still greater than the desired value (output YES from sub-step 202y), it is involved reiterating sub-step 202w and sub-step 202y until the pressure detected by the pressure sensor has reached the desired value (absolute pressure = atmospheric pressure + gap ε, or relative pressure equal to the gap ε).

If, conversely, the pressure has fallen to the desired value (output NO from sub-step 202y), the step of controlling the valve 7 involves detecting (step 204) the activation of the user device associated with the service line and the consequent demand for pressurized gas. If activation of the user device is detected (output YES from block 204), the valve 7 is commanded (step 205) to the fully open condition in order to opportunely serve the user device 4. The method then involves returning to the beginning of the cycle that is to step 201 of verifying the existence of a leak with the user device not in use, as previously described, and then retracing the steps/sub-steps already shown.

If, instead, no activation of the user device 4 is detected (output NO from block 204), the method involves returning to sub-step 202w and reiterating steps 202w, 202y and 202z.

In accordance with an aspect, the step of detecting 204 the activation of the user device 4 is advantageously performed without receiving signals from the user device or from an operator that indicate the activation of the user device itself, but using only information relating to the pressure of the gas flow passing through the service line detected by the pressure sensor 9.

In greater detail the detecting step is shown in the block diagram of figure 4a and includes:
- determining (block 204a) a variation in time of the pressure detected by said pressure sensor,
- verifying (block 204b) whether the value of said variation in time of the pressure detected by said pressure sensor, optionally the absolute value of the value of said variation in time of the pressure detected by said pressure sensor, is greater than a predetermined threshold Δ that may be received/set in this step or previously as already shown; it is, also, to be noted that the variation in time of the pressure is for example the derivative of said detected pressure in time,
- if (output YES from block 204b) the value of said variation in time of the pressure detected by said pressure sensor, optionally the absolute value of said variation in time of the pressure detected by said pressure sensor, is greater than or equal to the predetermined threshold Δ, the method concludes that there is an activation of the user device and involves commanding the valve to the open condition (thus moving to step/block 205, as already shown),
- if, conversely (output NO from block 204b), the value of said variation in time of the pressure detected by said pressure sensor, optionally the absolute value of said variation in time of the pressure detected by said pressure sensor, is less than the predetermined threshold Δ, the method concludes that there is no activation of the user device and involves controlling the valve in one or more regulation conditions in order to keep the absolute pressure detected downstream of the valve equal, within a tolerance, to atmospheric pressure plus said predetermined gap ε, or to keep the relative pressure detected downstream of the valve equal, within a tolerance, to the predetermined gap ε (in other words, the method involves returning to block/step 202w as already shown).

To conclude the discussion, it should be noted that the following components described in the foregoing discussion and useful for the execution of the gas leak monitoring method 100:
- the flow sensor 8 which can be positioned on each service line and configured to allow the determination of the flow rate of gas intended for the respective user device 4;
- optionally the pressure sensor 9 which can be positioned on each service line, for example positioned downstream of the valve 7 and upstream of the user device 4, and configured to allow the determination of the pressure of the gas intended for the respective user device (or another pressure sensor that can be positioned on the service line 6);
- the central processing unit 10 and/or the electronic boards 10' (which for example may be programmable digital units), configured (depending on whether the method 100 is performed by the unit 10 alone, by the boards 10' alone or by a cooperation of the unit 10 with the boards 10') to perform the gas leak monitoring method 100 described above,
may be directly implemented in the system 100 or constitute a separate gas leak monitoring device and installable on a pre-existing (traditional type) system operating with pressurized working gas, in order to render such system capable of being aware of any leaks in conditions of non-use of one or more of the user devices 4.

Analogously, the following components described in the foregoing discussion and useful for the execution of the leak reduction method 200:
- the valve 7 operative on each service line 6,
- optionally the flow sensor 8 operative on each service line and configured to enable the determination of the flow rate of gas intended for the respective user device 4;
- the pressure sensor 9 operative on each service line, for example positioned downstream of the valve 7 and upstream of the user device 4, and configured to enable the determination of the pressure of the gas intended for the respective user device;
- the central processing unit 10 and/or the electronic boards 10' (which for example may be programmable digital units), configured (depending on whether the method 200 is performed by the unit 10 alone, by the boards 10' alone or by a cooperation of the unit 10 with the boards 10') to perform the leak reduction method 200 described above,
may be directly implemented in the system 100, or may constitute a separate gas leak reduction device and that can be installed on a pre-existing (traditional type) system operating with pressurized working gas, in order to render such system capable of reducing leaks and therefore improving its energy efficiency.

Furthermore, a single device may be provided comprising the valve 7, the flow sensor 8, the pressure sensor 9 and the processing unit 10, in particular a programmable processing unit, configured to perform both the leak monitoring method 100 and the leak reduction method 200. Such device may be installed on a pre-existing (traditional type) system operating with pressurized working gas, in order to render such system capable of monitoring and reducing leaks and therefore improving its energy efficiency.

Finally, the following software products also form an object of the invention (which may be stored on a memory of any type, for example on a firmware, on an optical, magnetic memory or on an SDRAM, or on a signal or other still):
- a software product comprising instructions which, when executed by a programmable processing unit, configure such programmable processing unit to perform the leak monitoring and determination method 100 as described above,
- a software product comprising instructions which, when executed by a programmable processing unit configure such programmable processing unit to perform the leak reduction method 200 as described above, and
- a software product comprising instructions which, when executed by a programmable processing unit, configure such programmable processing unit to perform both the leak monitoring and determination method 100 and the leak reduction method 200, as described above.

The present invention lends itself to numerous variants that may be implemented by a person expert in the art and which all fall within the scope defined by the following claims.

## Claims

1. Method, implemented by a computer or electronic circuit, for reducing gas leak in a system (1) operating with pressurized working gas, optionally wherein the pressurized working gas is compressed air,
said system (1) comprising:
- a pressurized gas source (2), optionally equipped with a predetermined number of compressors (3),
- a predetermined number of user devices (4),
- a gas distribution circuit (5) configured to be placed in fluid communication with the pressurized gas source (2) and having one or more service lines (6) each configured to serve a respective one of said user devices (4),
- a valve (7) operating on each service line (6), said valve (7) being operable from a fully open condition to at least one control condition, in which the valve (7) causes partial or complete closure of the flow through the valve (7) itself,
- a respective pressure sensor operating on each service line (6), downstream of said valve (7) and upstream of the user device (4), and configured to allow determination of the gas pressure for the respective user device (4)
- optionally a respective flow sensor (8) operating on each service line (6) and configured to enable determination of the gas flow rate directed to the respective user device (4),
wherein the method includes the following steps performed for each of said service lines (6) using the respective valve (7), the respective pressure sensor (9) and optionally the respective flow sensor (8):
- verifying (201) whether information has been received indicating that gas leak is present on the service line (6) during non-use of the respective user device (4), and/or gas leak has been detected on the service line (6) during non-use of the respective user device (4),
- if said information has been received and/or said gas leak has been detected in the preceding step, controlling (202) the valve (7) from the open condition to the at least one control condition, causing a corresponding pressure reduction in a section of the service line (6) between the valve (7) and the respective user device (4).

2. Method according to claim 1, wherein the step of controlling (202) the valve (7) includes:
- detecting (202a), with said pressure sensor (9), the pressure in the section of the service line (6) between the valve (7) and the respective user device (4),
- driving (202c) the valve (7) in order to keep the pressure in said section of the service line (6) greater than atmospheric pressure,
wherein the atmospheric pressure is the pressure present in the environment in which the system (1) operates.

3. Method according to claim 2, wherein:
- the pressure sensor (9) is configured to determine absolute pressure, and the method involves determining (202b) whether or not the absolute pressure sensed downstream of the valve (7) and upstream of the user device (4) is greater than atmospheric pressure by at least a predetermined deviation (ε), or
- the pressure sensor (9) is configured to detect a relative pressure with respect to atmospheric pressure, and the method involves determining (202b) whether or not the relative pressure detected downstream of the valve (7) and upstream of the user device (4) is greater than the predetermined deviation (ε).

4. Method according to claim 3, wherein the step of controlling (202) the valve (7) includes:
- driving (202c1) the valve (7) in the or a control condition in case the determination (202b) of claim 3 gives a positive outcome, while
- in the event that the determination (202b) of claim 3 gives a negative outcome driving (202c2) the valve (7) to the open condition;
or
wherein the step of controlling the valve (7) includes:
- driving (202w) the valve (7) in one or more control conditions to keep the absolute pressure sensed downstream of valve (7) equal to the atmospheric pressure plus said predetermined deviation (ε), or to keep the relative pressure sensed downstream of valve (7) equal to the predetermined deviation (ε).

5. Method according to any one of the preceding claims, wherein the information indicative that gas leak is present on the service line (6) during non-use of the respective user device (4) includes:
- temporal information indicative of the fact that gas leak has been detected on the service line (6) at a given instant or time interval, and/or
- information relating to a reference flow rate that identifies the presence of gas leak in the service line (6).

6. A method according to any one of the preceding claims, wherein said pressurized working gas system (1) comprises a flow sensor (8) for each respective service line (6), said flow sensor (8) being operative upstream or downstream of the valve (7), and
wherein detecting (201b) that there is gas leak on the service line (6) during the non-use of the respective user device (4) includes detecting with the flow sensor (8) the flow rate passing through the respective service line (6) and determining that the flow rate passing through the same service line (6) is equal to the reference flow rate ± a margin of acceptability, optionally equal to 10% of the reference flow rate.

7. Method according to any of the preceding claims, in combination with claim 3, wherein the valve (7) is an on/off type valve operable between the fully open condition and a single control condition in which the valve (7) causes a complete closure of the flow through the valve;
wherein if the step of determining gives a positive outcome, controlling the valve (202) involves keeping (202c1) the valve (7) in the control condition in which there is complete closure of the flow through the valve (7), and
wherein if the step of determining gives a negative outcome, controlling the valve (202) involves driving (202c2) the valve (7) in the condition in which the valve (7) is completely open.

8. Method according to any one of the preceding claims 1 to 6, wherein the valve (7) is a modulating valve that is capable of being driven between the fully open condition and a plurality of control conditions wherein the valve (7) determines various degrees of partial closure of the flow through the valve, optionally wherein the control conditions of the modulating valve (7) also include a fully closed condition of the flow through the valve; and
wherein said controlling (202) the valve (7) includes driving (202w) the valve (7) in one or more control conditions of progressive partial closure to bring the absolute pressure sensed downstream of valve (7) to the atmospheric pressure plus a/said predetermined deviation (ε), or to bring the relative pressure sensed downstream of valve (7) to the predetermined deviation (ε).

9. Method according to any one of the preceding claims, wherein controlling (202) the valve (7) comprises detecting (204) the activation of the user device (4) associated with the service line (6) and the resulting demand for pressurized gas; and
wherein the step of detecting (204) the activation of the user device (4) is carried out
- preferably without receiving signals, from the user device (4) or from an operator, indicative of the activation of the user device (4), and
- using information about the pressure of the gas flowing through the service line (6) detected by the pressure sensor (9).

10. Method according to claim 9, wherein detecting (204) the activation of the user device (4) includes:
- determining (204a) a variation over time in the pressure detected by said pressure sensor (9),
- verifying (204b) whether a value of said variation over time of the pressure detected by said pressure sensor (9), optionally the modulus of the value of said variation over time of the pressure detected by said pressure sensor (9), is greater than a predetermined threshold (Δ);
optionally wherein determining (204a) the variation over time of the pressure detected by said pressure sensor (9) involves determining the derivative of said detected pressure over time.

11. Method according to claim 10, wherein if the value of said variation over time of the pressure detected by said pressure sensor (9), optionally the modulus of the value of said variation over time of the pressure detected by said pressure sensor (9), is greater than or equal to the predetermined threshold (Δ), controlling the valve (7) provides for driving (205) the valve (7) in the open condition.

12. Method according to claim 10 or 11, wherein if the value of said variation over time of the pressure detected by said pressure sensor (9), optionally the modulus of the value of said variation over time of the pressure detected by said pressure sensor (9), is less than the predetermined threshold (Δ), then controlling the valve (7) provides for driving (202w) the valve (7) in one or more control conditions of partial closure to keep the absolute pressure sensed downstream of the valve (7) equal to the atmospheric pressure plus said predetermined deviation (ε), or to keep the relative pressure sensed downstream of the valve (7) equal to the predetermined deviation (ε).

13. Method according to any one of the preceding claims, wherein for each of said user devices (4) there is provided a respective flow sensor (8) operating on a section of said gas distribution circuit (5), in particular on a respective service line (6) upstream or downstream of said valve (7), and configured to enable the determination of the flow rate of gas directed to the respective user device (4), and wherein verifying (201b) whether gas leak has been detected on the service line (6) during non-use of the respective user device (4), includes the following steps performed for each of said user devices (4) using the respective flow sensor (8):
- verifying whether there are time intervals with stable flow rate, and
- if there are time intervals with stable flow rate,
∘ identifying, among such stable flow rate time intervals, one or more relevant time intervals in which the flow rate measured by said flow sensor (8) is deemed non-negligible,
∘ determining a value of gas leak during non-use of the user device (4) as a function of one or more flow rate values measured by said flow sensor (8) in one or more of said relevant intervals.

14. Gas leak reduction device for a system (1) operating with a pressurized working gas, optionally wherein the pressurized working gas is compressed air, said system (1) comprising:
- a pressurized gas source (2), optionally equipped with a predetermined number of compressors (3),
- a predetermined number of user devices (4)
- a gas distribution circuit (5) configured to be placed in fluid communication with the pressurized gas source (2) and having one or more service lines (6) each configured to serve a respective one of said user devices (4),
wherein the device includes, for at least one of those service lines (6) or for each of those service lines (6):
- a valve (7) operating on each service line (6), said valve (7) being operable from a fully open condition to at least one control condition, in which the valve (7) causes partial or complete closure of the flow through the valve,
- a respective pressure sensor (9) operating on each service line (6), downstream of said valve (7) and upstream of the user device (4), and configured to allow determination of the gas pressure for the respective user device (4),
- optionally a respective flow sensor (8) operating on each service line (6) and configured to enable determination of the gas flow rate directed to the respective user device (4),
and wherein the device also includes:
- at least one processing unit (10), particularly a programmable processing unit, operatively connected with the valve (7), the pressure sensor (9) and, if present, with the flow sensor (8), wherein the processing unit (10) is configured to perform the method according to any one of the preceding claims.

15. System (1) configured for operating with a pressurized working gas, optionally wherein the pressurized working gas is compressed air, said system (1) comprising:
- a pressurized gas source (2), optionally equipped with a predetermined number of compressors (3),
- a predetermined number of user devices (4)
- a gas distribution circuit (5) configured to be placed in fluid communication with the pressurized gas source (2) and having one or more service lines (6) each configured to serve a respective one of said user devices (4),
- a device according to claim 14.
